# EUROPEAN PATENT APPLICATION

(11) **EP 1 333 248 A1**
(43) Date of publication of application: **06.08.2003**
(21) Application number: 02002580.5
(22) Date of filing: 04.02.2002
(51) Int. Cl.: G01C 21/34

(54) **A route navigation system including portable device**

(71) Applicant: SIEMENS AKTIENGESELLSCHAFT, 80333 München (DE)
(72) Inventor: Giessl, Oliver, 94315 Straubing (DE); Roderer, Goetz, 93051 Regensburg (DE)

(57) **Abstract**

A route navigation system with facilities for long-term power supply, data processing, data storage, and berth means for reversibly positioning a device that in a removed state allows stand-alone navigation, a bertheable navigation device and a vehicle-based navigation sub-system for use in such system, and a vehicle provided with such system or subsystem.

A navigation system for effecting route navigation from a first location along an optimized route to a destination location comprises vehicle-based facilities for long-term power supply, data processing, and data storage viz à viz the navigation of said vehicle. In particular, the system comprises vehicle-based berth means for accommodating reversible positioning of a navigation device that in a berthed state allows sharing of the vehicle-based facilities for collectively constituting said navigation system but in a removed state allows stand-alone navigation away from said vehicle-based facilities.

## Description

A route navigation system with facilities for long-term power supply, data processing, data storage, and berth means for reversibly positioning a device that in a removed state allows stand-alone navigation, a bertheable navigation device and a vehicle-based navigation sub-system for use in such system, and a vehicle provided with such system or subsystem.

The invention relates to a navigation system for effecting route navigation from a first location along an optimized route to a destination location, said system comprising vehicle-based facilities for long-term power supply, data processing, and data storage viz à viz the navigation of said vehicle.

Present-day route navigation systems have primarily and increasingly found application on board of motor vehicles. Generally, such system comprises a mechanism for the finding of an actual location, such as by GPS, a local or remote data bank for dynamic route determining, a software driven processing facility for dynamic route calculation, a visual display featuring a map image and/or directional indications, and an acoustic system for presenting user information.

The inventors have recognized that the fixed mounting on a vehicle allows various advantages, such as for example the cost-effective providing of power supply, the amply available space that is required for providing a visual display facility that may have a size of several inches, and for accommodating various peripherals such as a voice recognition facility and a CD-ROM drive that could be used for storing data and/or programs.

On the other hand, the inventors have also recognized that under various circumstances the fixed connection to the vehicle could become a burden, in that a certain destination could prove unreachable by the vehicle, such as in case the destination is in a pedestrian-only area, lies outside any feasible road, or is temporarily inaccessable, such as through police regulations or obstacles. Alternatively, a user could have certain preferences to cover a final part of the route on foot, such as when wishing to remain inconspicuous. The inventors have recognized that in such situation, the user would immensely benefit from a ***portable*** navigation system that on the one hand could be a handy assistant when removed from the vehicle, and on the other hand would benefit from the vehicle-based facilities when being connected therewith. A particular purpose of the portable device could be to find back the vehicle when the latter has been left in a parking house or parking lot.

In consequence, amongst other things, it is an object of the present invention to provide a navigation system that may be used in either of two modes, to wit, connected with the in-vehicle parts for optimum realization of the broadest feasible scope of vehicle navigation facilities, and on the other hand, as a stand-alone and portable device that will fulfil in a particular advantageous manner instant navigation requirements from the user person. The invention therewith offers much more than a portable navigation system that just has a power supply back-up facility located in the vehicle. In contradistinction, the overall idea of the present invention is that the relatively heavy, bulky, and high-quality facilities that are present in the vehicle could be missed for a short time and/or for limited purposes, whilst then offering the general advantages of a light-weight, small and portable tool.

Now therefore, according to one of its aspects the invention is characterized by vehicle based berth means for accommodating reversible positioning of a navigation device that in a berthed state allows sharing of said vehicle-based facilities for collectively constituting said navigation system but in a removed state allows stand-alone navigation away from said vehicle-based facilities.

As recited, the processing in the vehicle-based facilities could inter alia relate to data input or output, as well as organized data transfer between the vehicle-based facilities and the removable navigation device.

The invention furthermore relates to a vehicle-based navigation subsystem arranged for use in a system as claimed in Claim 1, to a portable navigation device arranged for use in a system as claimed in Claim 1, and to a motor vehicle provided with a navigation system as claimed in Claim 1, or with a navigation subsystem as claimed in Claim 2.

A navigation device according to the invention for in a removed state allowing stand-alone navigation away from vehicle-based facilities for so effecting route navigation from a first location along an optimized route to a destination location, is preferably characterized by bertheable facility means for accommodating reversible positioning of said navigation device viz à viz berth means associated to said vehicle-based facilities for long-term power supply, data processing, and data storage viz à viz the navigation of said vehicle.

According to other advantageous aspects of the invention said device is being characterized by featuring route information voice output, by featuring reversible association with an external memory facility, by a PIN protection facility for likewise personalizing said vehicle-based facilities, by a vehicle find-back facility, by a mating facility for reversibly mating to a personal computer, or similar apparatus, and/or by allowing data input from a PC-associated data input peripheral.

These and further aspects and advantages of the invention will be discussed more in detail hereinafter with reference to the disclosure of preferred embodiments, and in particular with reference to the appended Figures that show:
- Figure 1,: a perspective overview of the portable navigation device of the invention;
- Figure 2,: an overview of a comprehensive system configuration according to the invention.

Generally, the navigation according to an aspect of the present invention is effected from an arbitrary starting point to particular destination that cannot be reached with the vehicle. In practice, most often the navigation is started with the on-board facilities of the vehicle. At a certain point, the vehicle will be halted, and the portable CarFinder Hand-held-Navigator device will then be removed from the special slot of the vehicle-based berth, for further guidance of the user to the eventual destination. When berthed, the portable sub-system and the vehicle based subsystem will then share the GPS-Front End, the GPS Receiver, and the GPS micro-controller.

Through the integration of the CarFinder in the slot of the Vehicle On Board Navigation System, most or all of the following problems will be solved:
- automatic power supply for the CarFinder inside the vehicle
- automatic reload for the accumulator of the CarFinder inside the vehicle
- exchange of positional data, such as pertaining to "points-of-interest" to be reached on foot
- if preferred, exchange of voice and/or music, for information and/or entertainment, respectively
- automatic input of the most recent vehicle position when halted, for smoothly finding the vehicle back

On the other hand, by the connectiblity of the portable subsystem to a Personal Computer or the like, some or all of the following problems could be solved:
- downloading of geographical locations in the form of two- or three-dimensional coordinates of places where the user had never been before, for subsequent transfer to the in-vehicle subsystem, such as in case a first part of the journey should be covered by means of the vehicle
- straightforward configuring of such locations through using the PC, such as through graphical input on a map display. These locations, and even interval points that have been calculated in the PC can then by means of the portable subsystem be transferred to the in-vehicle subsystem
- each such location may then be accompanied by its name in the form of speech, which may later be outputted by the loudspeaker of the system. The voice used therefor can be anyone's
- in similar manner can music, such as MP3 data from Internet, be loaded into the CarFinder system, for later representation either through the portable part, or through the in-vehicle part
- in such manner, the CarFinder may be used as a "walkman" or dictation device. Any message to the user would be open to realization in the form of speech, such as touristic information or warnings about general conditions

The sharing mentioned earlier will of course lower the cost and effort that are necessary for development of the system. The CarFinder as mobile device may get a system-specific indication or PIN for protection, rendering theft of either the mobile part or the vehicle part essentially non-profitable.

The permanent memory of the portable part may be executed as a so-called Memory Stick that would be removable. This in turn would render the following advantages:
- Memory Sticks may be exchanged among various CarFinders. This may be used to transfer information about particular destination to another person, without necessity to transfer any portable part of the CarFinder to that other person
- the number of Memory Sticks is arbitrary, leading to an extendible memory size
- when the Memory Stick contains music data, this would represent an inexpensive solution to replace an integrated CD-player of Cassette Deck

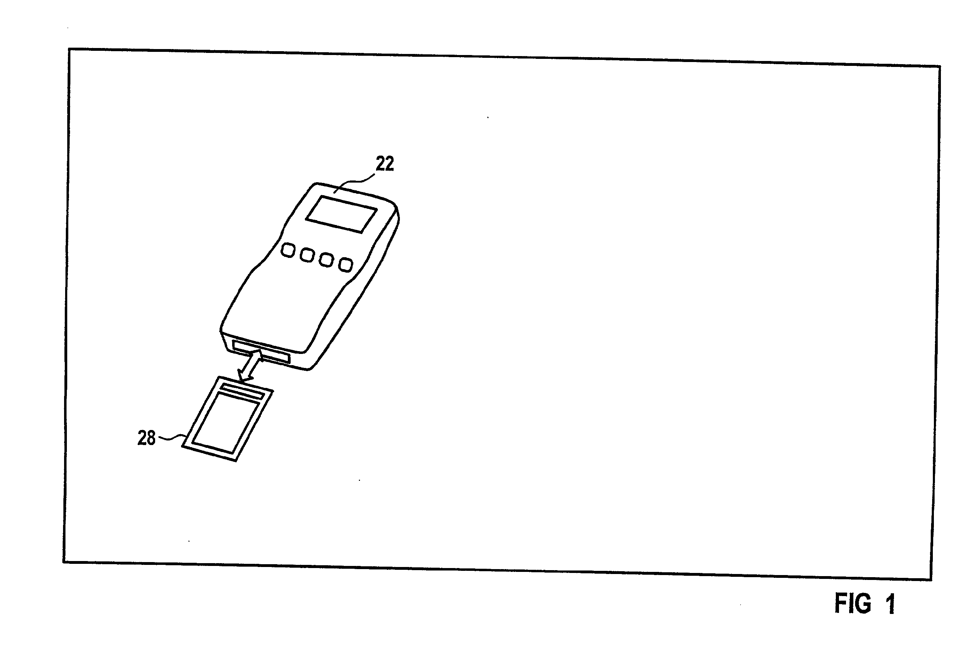

Figure 1 illustrates a perspective overview of the portable navigation device 22 of the invention. As shown, the device has a housing provided with a relatively small display, a set of control buttons, and a slot for inserting a so-called "Memory Stick" 28, that is a comprehensive memory device with a semiconductor storage area, and with an interface that both mechanically and electrically is arranged for mating with a corresponding slot or berth in the portable navigation device. The device is provided with GPS-antenna not shown for brevity, GPS-front end, GPS-receiver, and GPS micro-controller. The display allows usage of a "simple pointer" menu and/or displaying of waypoints. Further operational aspects of the device concern the providing of a rechargeable battery, a compass based on sensitive magnetic field sensors, short-travel switches for inputting user requests and acknowledgements, an interface to a vehicle-based navigation system, a Memory Stick slot, or alternatively a fixed memory, a microphone or loudspeaker, and special housing for slot integration into an on-board navigation system inside a vehicle. Given an appropriate amount of information present inside the portable device, it can guide a user along an appreciable distance to an intended destination, and could additionally provide the user with music, touristic information, and voice output signalling, such as "now you have reached Cologne's Cathedral".

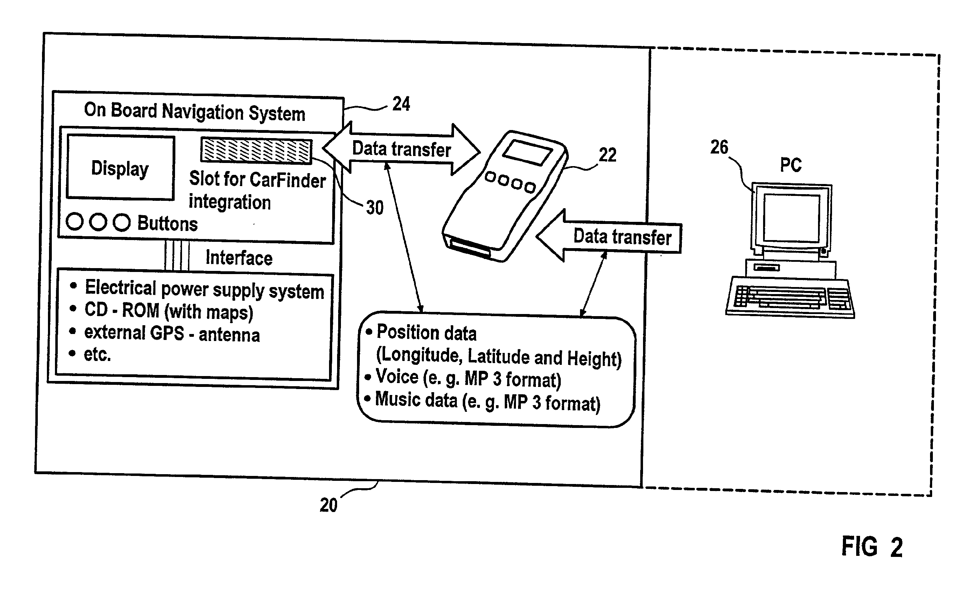

Figure 2 illustrates an overview of a comprehensive system configuration according to the invention, that may be arranged within a motor vehicle that has been loosely indicated by means of rectangle 20. Next to the portable device 22 of Figure 1, the configuration at left contains the vehicle on-board navigation sub-system 24. As shown, various elements thereof are a relatively larger display, such as measuring 3 X 2 inches, a slot 30 for integrating the CarFinder device, a set of control buttons, that may be larger than the set that is present on the CarFinder device, and an internal interface to various peripherals, such as an electrical power supply system, a CD-ROM drive with maps, and an external GPS antenna that may well have superior performance compared with the relatively small antenna of the portable device. The full scope of vehicle navigation functions is attained through the combination of vehicle subsystem and portable device, wherein the CarFinder's GPS components are used, except the antenna, whereas background data are to a large degree provided by the vehicle subsystem. As shown, data transfer in this combination pertains to position data (three-dimensional), voice, and music. Generally, the disclosure here above of the navigation functions proper has been brief, in order not to unnecessarily obscure the crucial aspects of the invention.

At right, the Personal Computer 26 may execute background functions, such as providing an optimalization of the travelling salesman's problem, providing a very large data file for referencing, execute all kinds of context searching regarding the optimum route, such as avoiding adverse conditions, such as traffic jams that occur at specific forecastable instants, and various others. Like the vehicle system, the PC when connected provides the CarFinder with power supply for the portable device ans well as power for battery recharging, and provides position data, and voice and music data for storage in the Carfinder. Note that generally, the PC would be located outside the vehicle, although this is not an express limitation; see the interrupted line.

The invention has here above been disclosed with reference to preferred embodiments, that should be taken by way of examples, rather than by way of restriction. Therefore, the due scope of the present invention should be considered according to the scope of the Claims appended hereto.

## Claims

1. A navigation system for effecting route navigation from a first location along an optimized route to a destination location, said system comprising vehicle-based facilities (24) for long-term power supply, data processing, and data storage viz à viz the navigation of said vehicle,
said system being **characterized by** vehicle based berth means (30) for accommodating reversible positioning of a navigation device (22) that in a berthed state allows sharing of said vehicle-based facilities for collectively constituting said navigation system but in a removed state allows stand-alone navigation away from said vehicle-based facilities.

2. A vehicle-based navigation sub-system for use in a vehicle navigation system for route navigation from a first location along an optimized route to a destination location, said sub-system comprising vehicle-based facilities (24) for long-term power supply, data processing, and data storage viz à viz the navigation of said vehicle, said sub-system being **characterized by** berth means (30) for accommodating reversible positioning of a navigation device (22) that in a berthed state allows sharing of said vehicle-based facilities for collectively forming an overall said vehicle navigation system.

3. A navigation device (22) for in a removed state allowing stand-alone navigation away from vehicle-based facilities for so effecting route navigation from a first location along an optimized route to a destination location, being **characterized by** bertheable facility means for accommodating reversible positioning of said navigation device (22) viz à viz berth means (30) associated to said vehicle-based facilities (24) for long-term power supply, data processing, and data storage viz à viz the navigation of said vehicle.

4. A device as claimed in Claim 3, being **characterized by** featuring route information voice output.

5. A device as claimed in Claim 3, being **characterized by** featuring reversible association with an external memory facility (28).

6. A device as claimed in Claim 3, being **characterized by** a PIN protection facility for likewise personalizing said vehicle-based facilities (24).

7. A device as claimed in Claim 3, being **characterized by** a vehicle find-back facility.

8. A device as claimed in Claim 3, being **characterized by** a mating facility for reversibly mating to a personal computer (26) or similar apparatus.

9. A device as claimed in Claim 8, being **characterized by** allowing data input from a PC-associated data input peripheral.

10. A motor vehicle being **characterized by** a navigation system as claimed in Claim 1 or by a navigation sub-system as claimed in Claim 2.
